# EUROPEAN PATENT APPLICATION

(11) **EP 3 315 437 A1**
(43) Date of publication of application: **02.05.2018**
(21) Application number: 17198636.7
(22) Date of filing: 26.10.2017
(51) Int. Cl.: B65G 65/23

(54) **TIPPING MACHINE OF A BIN CONTAINING A PLURALITY OF FRUITS, SUITABLE FOR TIPPING A BIN CONTAINING A PLURALITY OF WATER MELONS, IN WHICH EACH WATER MELON HAS A WEIGHT OF ABOVE 8 KG**

(30) Priority: 28.10.2016 IT 201600109176
(71) Applicant: Meccanica Malavasi S.r.l., 46028 Sermide (Mantova) (IT)
(72) Inventor: CHIEREGATI, Cristian, 46028 SERMIDE FELONICA (MANTOVA) (IT); MALAVASI, Roberto, 46028 SERMIDE FELONICA (MANTOVA) (IT); MALAVASI, Enrico, 46028 SERMIDE FELONICA (MANTOVA) (IT)
(74) Representative: Dall'Olio, Christian

(57) **Abstract**

A machine (1) for tipping a bin (2) is described, containing a plurality of fruits (3), in particular water melons, for limiting damage and ruining of the fruits (5). The machine (1) comprises: a support element (4) for restingly receiving the bin (2); an abutting element (6), facing the support element (4) for abutting the fruits and retaining the fruits (5) when the bin (2) is arranged between the support element (4) and the abutting element (6) and is overturned; wherein the abutting element (6) is dimensioned and positioned in order to be able to enter internally of the bin (2) and wherein the support element (4) and the abutting element (6) are nearable to one another so that at least a part of the abutting element (6) enters the bin (2), when the bin (2) is arranged between the support element (4) and the abutting element (6).

## Description

The present invention relates to the technical sector concerning tipping of bins containing a plurality of fruits. In particular, the invention relates to a method for tipping a bin containing a plurality of fruits and a tipping machine of a bin containing a plurality of fruits, suitable for tipping a bin containing a plurality of water melons, in which each water melon has a weight of above 8kg.

In the fruit and vegetable sector a machine is known for tipping a bin containing a plurality of fruits, comprising: a support element for restingly receiving a bin containing a plurality of fruits; an abutting element for abutting the fruits of the plurality of fruits, which abutting element faces the support element (4) for retaining the fruits contained in the bin when the bin is arranged between the support element and the abutting element and is overturned. In particular, the support element can be a roller plane on which the bin is made to slide up to reaching a predetermined position, while the abutting element can be a portion of belt of a loop-wound conveyor belt, which conveyor belt is arranged so that the relative belt abuts the opening edge of the bin and occludes, by means of the portion of belt, the opening of the bin.

Once the bin has been positioned on the roller plane, up to reaching the predetermined position, the roller plane and the belt are neared to one another up to abutting the belt against the opening edge of the bin. Then the abutting element, the conveyor belt and the bin are rotated by one hundred and eighty degrees, with a consequent overturning of the fruits, which are contained in the bin, above the belt. The bin is then activated so as to transfer the fruits and the bin towards the following stations.

To prevent crushing of the fruits during the nearing of the conveyor belt and the support element to one another up to abutment of the belt against the opening edge of the bin, the fruits must not be piled above the top opening of the bin.

In this matter, if the fruits are of small dimensions, such as apples and pears for example, the bin can be almost fully filled; however, if the fruits are of large dimensions, as is the case with water melons, then the bin is generally filled only up to three-quarters of its capacity in order to prevent the water melons from being piled above the top opening of the bin.

In the case of fruits of small dimensions, and an almost-total filling of the bin, the overturning of the bin does not cause any particular damage to the fruits: this is due to the fact that the fruits have a modest weight and a limited possibility of movement inside the bin during the overturning.

Instead, in the case of large-dimension fruits, and an only-partial filling (of about three quarters of the capacity) of the bin, during the tipping of the bin the fruits move with greater freedom and change their positions, sometimes violently impacting against one another (also due to the weight of the fruits), so that a high percentage thereof can break or be damaged. If the fruits are water melons and each weighs more than 8 kg, the use of a machine like the one described becomes decidedly uneconomical owing to the excessive number of water melons either damaged or ruined.

JP 2014 214017 describes a machine for tipping a bin containing a plurality of fruits, comprising a cover inferiorly provided with a yielding abutting element. The cover is applied to the bin in such a way that when the cover closes the bin the abutting element occupies the space comprises between the opening edge of the bin, on one side, and the fruits contained in the bin, on the other side. In this way the space in which the fruits can move during the tipping of the bin can be limited, preventing the fruits from being damaged.

The aim of the invention consists in disclosing an alternative machine to the one described in the foregoing in reference to JP 2014 214017.

The above aim has been attained by a machine for tipping a bin containing a plurality of fruits, according to claim 1 or 2.

Specific embodiments of the invention will be described in the following part of the present description, according to what is set down in the claims and with the aid of the accompanying tables of drawings, in which:
- figures 1-6 are schematic lateral views of a first embodiment of the machine of the present invention and a bin containing a plurality of water melons, during six operating steps;
- figure 2A is a view in vertical section of the bin and a part of the machine of figure 2;
- figures 7-12 are schematic lateral views of a second embodiment of the machine of the present invention and a bin containing a plurality of water melons, during six operating steps;
- figure 8A is a view in vertical section of the bin of a part of the machine of figure 13;
- figures 10A, 10A are schematic lateral views of a variant of the second embodiment of the machine of the machine of the present invention, during the same operating steps as illustrated in figures 11, 12 respectively.

With reference to the appended tables of drawings, reference numeral (1) denotes in its entirety a machine (1) for tipping a bin (2) containing a plurality of fruits (3) that is the object of the present invention. This machine (1) is in particular suitable for tipping a bin (2) containing a plurality of water melons (7), where each water melon (8) has a weight of above 8kg, wherein the fruits (5) of the plurality of fruits (3) partially fill the bin (2), so that a free space is defined which comprises: a first space between each fruit (5) and another of the plurality of fruits (3); and a second space between the opening edge (9) of the bin (2), on one side, and the fruits (5) of the plurality of fruits (3) on another side.

In particular, the second space can be understood as the space defined between the through-plane and the opening edge (9) of the bin (2), on one side, and the fruits (5) of the plurality of fruits (3) on the other side.

The machine (1) comprises: a support element (4) for restingly receiving a bin (2) containing a plurality of fruits (3); an abutting element (6) for abutting the fruits (5) of the plurality of fruits (3), which abutting element (6) faces the support element (4) for retaining the fruits (5) contained in the bin (2) when the bin (2) is arranged between the support element (4) and the abutting element (6) and is overturned. The abutting element (6) is dimensioned and positioned in order to be able to enter internally of the bin (2). Further, the support element (4) and the abutting element (6) are nearable to one another so that at least a part of the abutting element (6) enters the bin (2), when the bin (2) is arranged between the support element (4) and the abutting element (6), thus limiting the free space in which the fruits (5) of the plurality of fruits (3) can move during the tipping of the bin (2).

The fact that the abutting element enters the bin determines a reduction of the free space in which the fruits, for example water melons, can move during the tipping: this significantly reduces the probability of breaking or ruining the fruits.

The machine can also be used with fruits having a weight of lower than 8kg, as in this case too the probability of damage or ruining of the fruits is reduced.

The emptying process of the bins of water melons of any dimensions can be automated, with a saving in terms of time and labour, with a consequent reduction in costs and an increase in productivity.

The machine for tipping (1) a bin (2) containing a plurality of fruits (3) can be configured in such a way that the support element (4) and the abutting element (6) are nearable to one another up to when the abutting element (6) contacts the topmost fruits (5) of the plurality of fruits (3) contained in the bin (2). The expression "topmost fruits" is taken to mean the fruits (5) defining the most external surface of the pile of fruits (5) which makes up the plurality of fruits (3) contained in the bin (2).

In other words, the abutting element (6) enters the bin (2) up to contacting at least a part of the external surface of each of the topmost fruits (5) of the plurality of fruits (3) so as to eliminate, or greatly reduce, the second free space in the bin (2) and thus prevent ruining the fruits (5) of the plurality of fruits (3) during the overturning of the bin (2).

In the figures, the fruits (5) illustrated are water melons (8) having large dimensions, each having for example a weight of greater than 8 kg. In general, the fruits (5) might be of any type.

The machine (1) can comprise a main frame (10), a secondary frame (11), which is rotatably coupled to the main frame (10), motor means (the figures illustrate by way of example a mechanical transmission) for activating the secondary frame (11) in rotation.

Further, the machine (1) can comprise a pair of jaws (12) that is borne by the secondary frame (11) and which is activatable for lifting the bin (2) after the bin (2) has been tipped. The advantage of the use of the jaws (12) will emerge clearly from the following part of the description. The support element (4) and the abutting element (6) are preferably borne by the secondary frame (11).

The machine (1) can preferably comprise at least a retaining element (13) which is borne by the secondary frame (11), which for example can be solidly constrained to the secondary frame (11), for retaining the bin (2) when the bin (2) is arranged between the support element (4) and the abutting element (6) and is overturned. The retaining element (13) can be a transversal bar which abuts the front wall of the bin (2) when the bin (2) is arranged between the support element (4) and the abutting element (6).

The machine (1) can comprise at least a guide (14) (in the figures two straight flanked and parallel guides (15) are illustrated by way of example), preferably solidly constrained to the secondary frame (11), for making the support element (4) and the abutting element (6) nearable to one another.

The support element (4) can be a roller plane, motorised or idle, or a conveyor belt. Alternatively, the machine (1) can comprise two support elements (4).

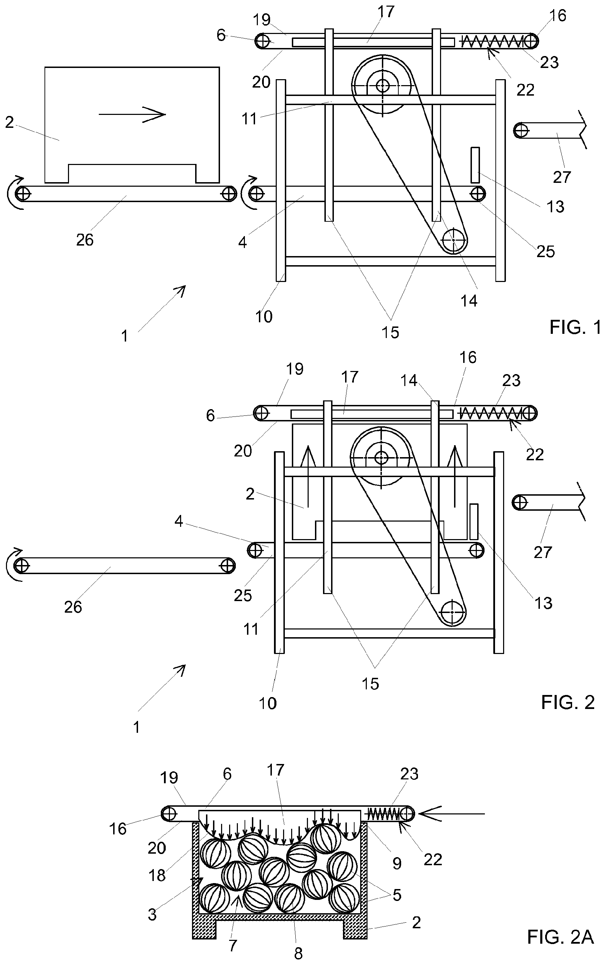

A description follows of a first embodiment of the machine, see figures 1-6, 2A.

The machine (1) comprises: a first conveyor belt (16); an inflatable element (17); inflating means (not illustrated) for inflating the inflatable element (17). The abutting element (6) is identified in a portion of belt (18) of the first conveyor belt (16). The inflatable element (17) and the portion of belt (18) are arranged with respect to one another so that, when the bin (2) is resting on the support element (4) and the inflatable element (17) is inflated, the inflatable element (17) presses against the portion of belt (18) so that at least a part of the inflatable element (17) and the portion of belt (18) enter the bin (2).

The first conveyor belt (16) is preferably loop-wound and comprises a first branch (19) and a second branch (20) which faces the first branch (19); further, the inflatable element (17) is interposed between the first branch (19) and the second branch (20).

Alternatively (solution not illustrated in the drawings) the first conveyor belt (16) is not loop-wound and comprises one branch only (equivalent to the second branch (20) illustrated in figure 2A) which is interposed between the inflatable element (17) and the bin (2) when the bin (2) is resting on the support element (4).

The machine (1) preferably comprises tensioning means (22) for tensioning the belt of the first conveyor belt (16), which tensioning means (22) are deactivatable for reducing the tensioning of the first conveyor belt (16) and for enabling entry of the portion of belt (18) into the bin (2). The tensioning means (22) can comprise for example a pneumatic spring (23).

The inflatable element (17) can be a cushion or in any case can be shaped as a cushion. The inflating means can also be adapted for inflating the inflatable element (17): for example, the inflating means can comprise a discharge valve (not illustrated) arranged along the connection between the inflatable element (17) and the inflating means, so that the deactivating of the inflating means and the opening of the discharge valve can determine the deflating of the inflatable element (17).

The machine (1) can comprise an inlet conveyor belt (26) and an outlet conveyor belt (27).

In the example illustrated in figures 1-6, 7-12, 10A and 11A, the support element (4) is identified in a second conveyor belt (25). As already specified, this should not be understood in a limiting sense as the support element (4) can also be a roller plane or a rest plane.

There follows a description of a possible functioning mode of the machine (1) in accordance with this first embodiment.

With reference to figure 1, a bin (2) containing a plurality of water melons (7) is transferred by the inlet conveyor belt (26) towards the support element (4), which as mentioned is identified by the second conveyor belt (25). In this step the inlet conveyor belt (26) and the support element (4) are aligned so as to facilitate the transfer the bin (2) on the support element (4).

Once the bin (2) has gone to rest on the support element (4), up to the abutting against the retaining element (13), the support element (4) is raised towards the first conveyor belt (16) up to when a portion of belt (18) of the first conveyor belt (16) abuts the opening edge (9) of the bin (2).

At this point (figure 2A), the tensioning means (22) are deactivated so as to reduce the tensioning of the first conveyor belt (16) and the inflating means are activated so as to inflate the inflatable element (17): the inflatable element (17) thus presses against the portion of belt (18) which is at the lower branch thereof so that at least a part of the inflatable element (17) and the portion of belt (18) enter the bin (2) up to contacting the topmost fruits (5) of the plurality of fruits (3), which in the example are water melons (8).

The machine (1) can comprise a housing (not illustrated) which is borne by the first conveyor belt (16) for housing the inflatable element (17). The housing is preferably arranged so that when the inflating means are activated the inflatable element (17) projects towards the support element (4).

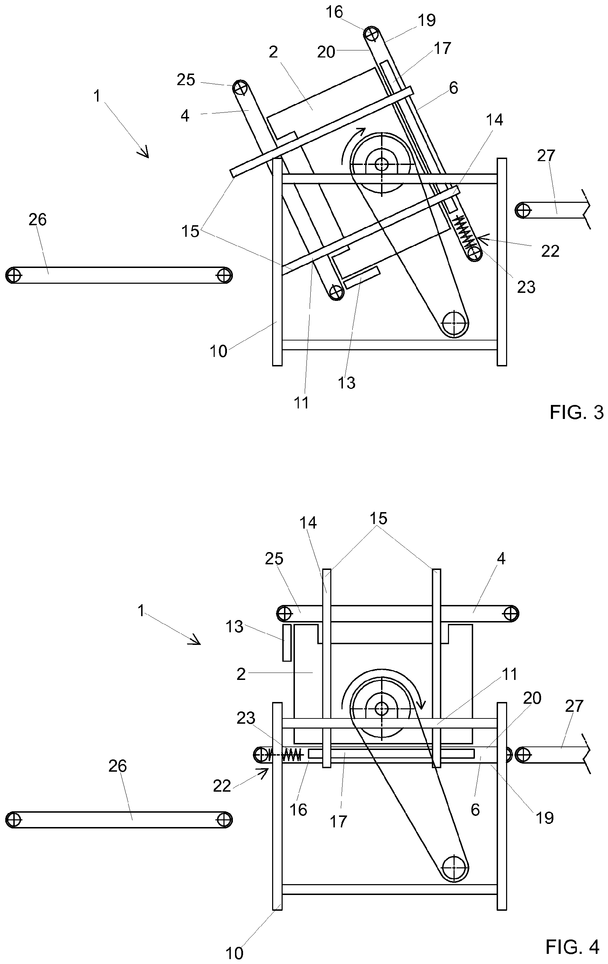

With the machine (1) in this configuration the bin (2) is overturned by activating the motor means, which rotate the secondary frame (11) by about one hundred and eighty degrees until the first conveyor belt (16) is aligned with the outlet conveyor belt (27) in order to allow translation of the bin (2) and the water melons (8) towards successive stations (not illustrated), see figures 3, 4.

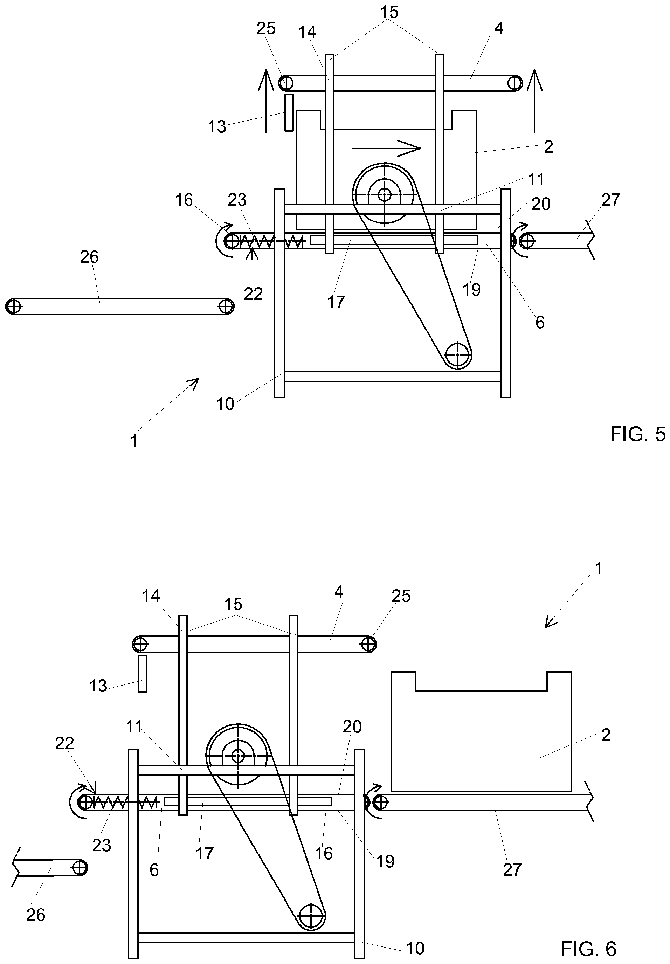

At this point the support element (4) is raised, i.e. distanced from the first conveyor belt (16) (figure 5), and the first conveyor belt (16) and the outlet conveyor (27) are activated (figure 6).

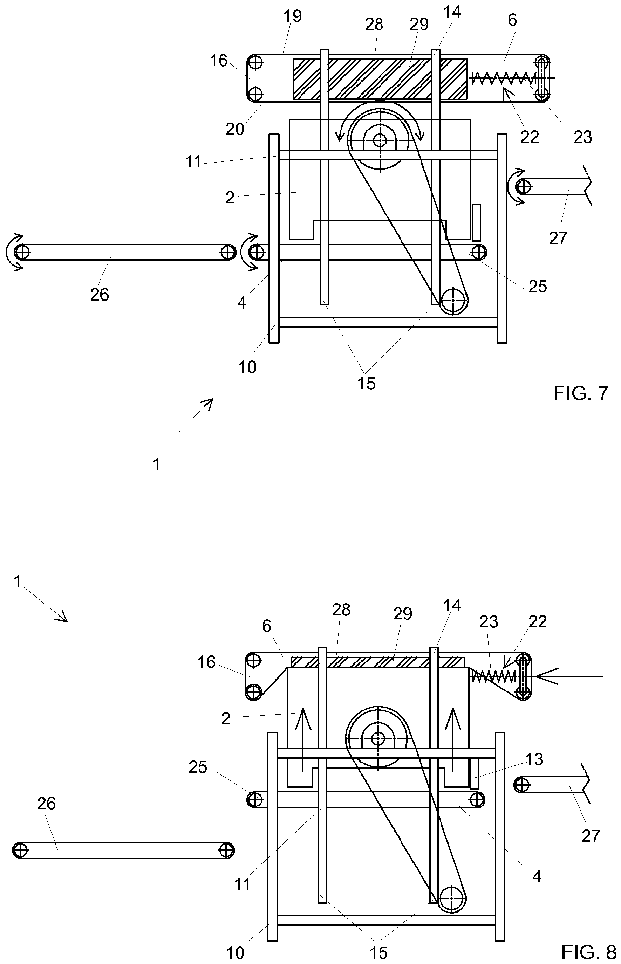

A second embodiment of the machine will now be described; see figures 7-12 and 8A.

The machine (1) comprises: a first conveyor belt (16); a member (28) that is shaped as a mattress (29) and which is yieldable for absorbing the kinetic energy of the fruits (5) of the plurality of fruits (3). The abutting element (6) is identified in a portion of belt (18) of the first conveyor belt (16). The member (28) and the portion of belt (18) are arranged with respect to one another in such a way that when the bin (2) is resting on the support element (4), the nearing of the support element (4) and the first conveyor belt (16) to one another has a consequence that at least a part of the member (28) and the portion of belt (18) enter into the bin (2).

The first conveyor belt (16) is preferably loop-wound and comprises a first branch (19) and a second branch (20) which faces the first branch (19); further, the member (28) is interposed between the first branch (19) and the second branch (20).

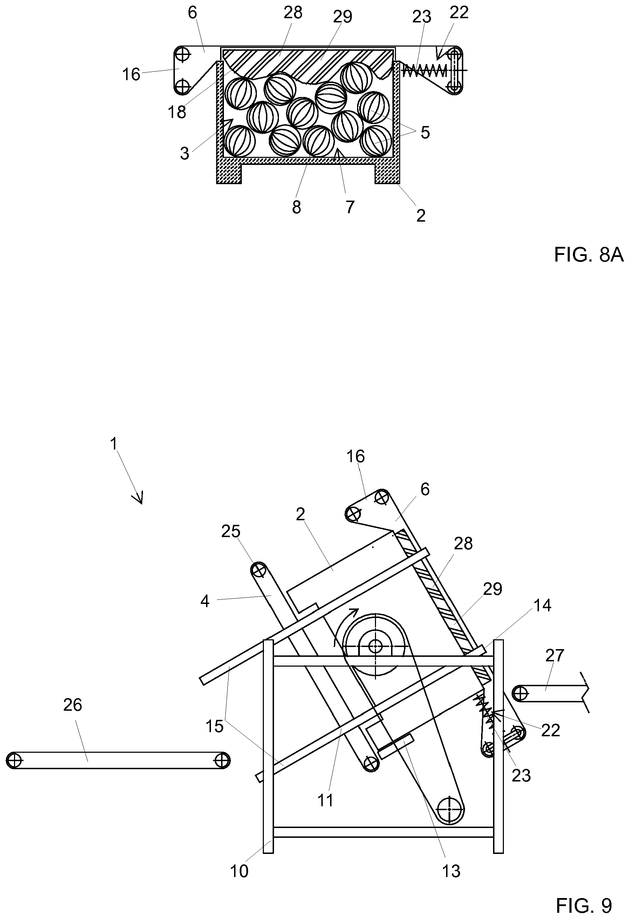

Alternatively (solution not illustrated in the drawings), the first conveyor belt (16) is not loop-wound and comprises one branch only (equivalent to the second branch (20) illustrated in figure 8A) which is interposed between the mattress (29) and the bin (2) when the bin (2) is resting on the support element (4).

The machine (1) preferably comprises tensioning means (22) as in the case of the first embodiment described in the foregoing.

The machine (1) can comprise an inlet conveyor belt (26) and an outlet conveyor belt (27).

In the example illustrated in figures 7-12, 10A and 11A, the support element (4) is identified in a second conveyor belt (25). As already specified, this should not be understood in a limiting sense as the support element (4) can also be a roller plane or a rest plane.

There follows a description of a possible functioning mode of the machine (1) in accordance with this second embodiment.

With reference to figure 7, a bin (2) containing a plurality of water melons (7) is transferred by the inlet conveyor belt (26) towards the support element (4), which as mentioned is identified by the second conveyor belt (25). In this step the inlet conveyor belt (26) and the support element (4) are aligned so as to facilitate the transfer the bin (2) on the support element (4).

Once the bin (2) has gone to rest on the support element (4), up to the abutting against the retaining element (13), the tensioning means (22) are deactivated so as to reduce the tensioning of the first conveyor belt (16).

Subsequently (figure 8) the support element (4) is raised towards the first conveyor belt (16): during the raising the opening edge (9) of the bin (2) contacts the portion of belt (18) of the first conveyor belt (16), drawing the portion of belt so that it abuts the member (28); proceeding with the raising, the opening edge (9) of the bin (2) progressively tensions the belt of the first conveyor belt (16) so that at least a part of the member (28) and the portion of belt (18) enter inside the bin (2).

As they enter the bin (2), the portion of belt (18) contacts the topmost fruits (5) of the plurality of fruits (3) in this case water melons (8), and consequently the member (28) deforms and fully fills the second free space.

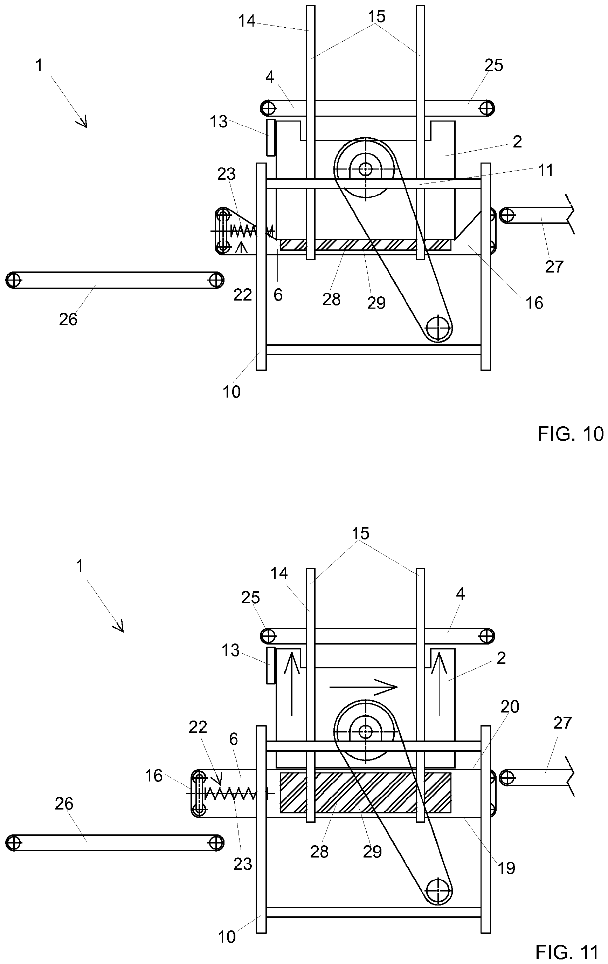

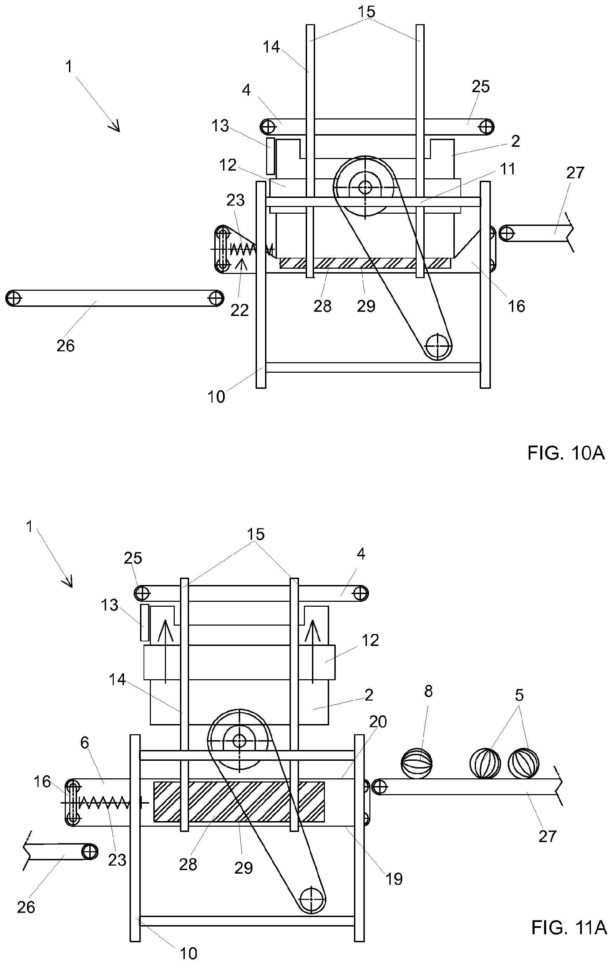

With the machine (1) in this configuration the bin (2) is overturned by activating the motor means (figures 9 and 10), which rotate the secondary frame (11) by about one hundred and eighty degrees until the first conveyor belt (16) is aligned with the outlet conveyor belt (27) in order to allow transfer of the bin (2) and the water melons (8) towards successive stations (not illustrated).

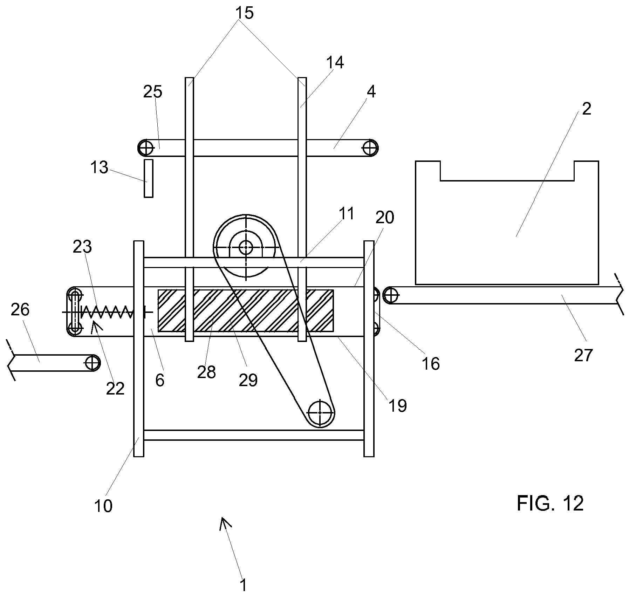

At this point the second conveyor belt (25) is raised and the tensioning means (22) newly activated (figure 11). The first conveyor belt (16) is then successively activated in order to move the bin (2) and the water melons (8) on the outlet conveyor belt (27) (figure 12).

Figures 10A, 11A illustrate a variant which includes the use of a pair of jaws. In this case the bin (2) can be raised by the pair of jaws (12) so that only water melons (8) go onto the outlet conveyor belt (27). By inversely rotating the secondary frame (11) the empty bin (2) can be returned onto the inlet conveyor belt (26).

Non-illustrated variants of the first and second embodiment described in the foregoing include the use of a first conveyor belt (16) made of a material provided with an elasticity such as to enable entry of the portion of belt (18) into the bin (2).

It will advantageously not be necessary to use specific tensioning means (22), so the machine (1) will be simpler and more economical.

It is understood that the above has been described by way of example and that any technical-functional variants of the proposed system are considered to fall within the protective scope of the present technical solution, as claimed in the following.

## Claims

1. Tipping machine (1) of a bin (2) containing a plurality of fruits (3), suitable for tipping a bin (2) containing a plurality of water melons (7), wherein each water melon (8) has a weight of above 8kg, wherein the fruits (5) of the plurality of fruits (3) partially fill the bin (2), so that a free space is defined which comprises: a first space between each fruit (5) and another of the plurality of fruits (3); and a second space between the opening edge (9) of the bin (2), on one side, and the same fruits (5) of the plurality of fruits (3), on another side, the machine (1) comprising:
a support element (4) for restingly receiving a bin (2) containing a plurality of fruits (3);
an abutting element (6) for abutting the fruits (5) of the plurality of fruits (3), which abutting element (6) faces the support element (4) for retaining the fruits (5) contained in the bin (2) when the bin (2) is arranged between the support element (4) and the abutting element (6) and is overturned;
the abutting element (6) being dimensioned and positioned so as to be able to enter internally of the bin (2);
the support element (4) and the abutting element (6) being nearable to one another so that at least a part of the abutting element (6) enters the bin (2), when the bin (2) is arranged between the support element (4) and the abutting element (6), thus limiting the free space in which the fruits (5) of the plurality of fruits (3) can move during the tipping of the bin (2);
the tipping machine being **characterised in that**:
it comprises a first conveyor belt (16);
it comprises an inflatable element (17);
it comprises inflating means for inflating the inflatable element (17);
the abutting element (6) is identified in a portion of belt (18) of the first conveyor belt (16);
the inflatable element (17) and the portion of belt (18) are arranged with respect to one another so that, when the bin (2) is resting on the support element (4) and the inflatable element (17) is inflated, then the inflatable element (17) presses against the portion of belt (18) so that at least a part of the inflatable element (17) and the portion of belt (18) enter into the bin (2).

2. Tipping machine (1) of a bin (2) containing a plurality of fruits (3), suitable for tipping a bin (2) containing a plurality of water melons (7), wherein each water melon (8) has a weight of above 8kg, wherein the fruits (5) of the plurality of fruits (3) partially fill the bin (2), so that a free space is defined which comprises: a first space between each fruit (5) and another of the plurality of fruits (3); and a second space between the opening edge (9) of the bin (2), on one side, and the same fruits (5) of the plurality of fruits (3), on another side, the machine (1) comprising:
a support element (4) for restingly receiving a bin (2) containing a plurality of fruits (3);
an abutting element (6) for abutting the fruits (5) of the plurality of fruits (3), which abutting element (6) faces the support element (4) for retaining the fruits (5) contained in the bin (2) when the bin (2) is arranged between the support element (4) and the abutting element (6) and is overturned;
the abutting element (6) being dimensioned and positioned so as to be able to enter internally of the bin (2);
the support element (4) and the abutting element (6) being nearable to one another so that at least a part of the abutting element (6) enters the bin (2), when the bin (2) is arranged between the support element (4) and the abutting element (6), thus limiting the free space in which the fruits (5) of the plurality of fruits (3) can move during the tipping of the bin (2);
the tipping machine being **characterised in that**:
it comprises a first conveyor belt (16);
it comprises a member (28) that is shaped as a mattress (29) and which is yieldable for absorbing the kinetic energy of the fruits (5) of the plurality of fruits (3);
the abutting element (6) is identified in a portion of belt (18) of the first conveyor belt (16);
the member (28) and the portion of belt (18) are arranged with respect to one another in such a way that, when the bin (2) is resting on the support element (4), then the nearing of the support element (4) and the first conveyor belt (16) to one another has a consequence that at least a part of the member (28) and the portion of belt (18) enter into the bin (2).

3. Tipping machine (1) of a bin (2) containing a plurality of fruits (3) according to claim 1, wherein the first conveyor belt (16) is loop-wound and comprises a first branch (19) and a second branch (20) which faces the first branch (19), and wherein the inflatable element (17) is interposed between the first branch (19) and the second branch (20).

4. Tipping machine (1) of a bin (2) containing a plurality of fruits (3) according to claim 2, wherein the first conveyor belt (16) is loop-wound and comprises a first branch (19) and a second branch (20) which faces the first branch (19), and wherein the member (28) is interposed between the first branch (19) and the second branch (20).

5. Tipping machine (1) of a bin (2) containing a plurality of fruits (3) according to any one of the claims 1, 2, 3, 4, wherein it comprises tensioning means (22) for tensioning the belt of the first conveyor belt (16), which tensioning means (22) are deactivatable for reducing the tensioning of the first conveyor belt (16) and for enabling the entry of the portion of belt (18) into the bin (2).

6. Tipping machine (1) of a bin (2) containing a plurality of fruits (3) according to any one of the claims 1, 2, 3, 4, wherein the first conveyor (16) is provided with an elasticity such as to enable the entry of the portion of belt (18) into the bin (2).

7. Tipping machine (1) of a bin (2) containing a plurality of fruits (3) according to any one of the preceding claims, comprising: a main frame (10), a secondary frame (11), which is rotatably coupled to the main frame (10), motor means for activating the secondary frame (11) in rotation and a pair of jaws (12) that is borne by the secondary frame (11) and which is activatable for lifting the bin (2).

8. Tipping machine (1) of a bin (2) containing a plurality of fruits (3) according to claim 1 or 2, wherein the support element (4) and the abutting element (6) are nearable to one another up to when the abutting element (6) contacts the emerging fruits (5) of the plurality of fruits (3) contained in the bin (2).
